# EUROPEAN PATENT SPECIFICATION

(11) **EP 3 192 844 B1**
(45) Date of publication and mention of the grant of the patent: **24.02.2021**
(21) Application number: 16150931.0
(22) Date of filing: 12.01.2016
(51) Int. Cl.: C09G 1/02, B24B 31/00, B24B 31/06, B24B 31/10, B24B 31/112

(54) **METHOD AND DEVICE FOR CHEMICAL MECHANICAL POLISHING**
VERFAHREN UND VORRICHTUNG ZUM CHEMISCH-MECHANISCHEN POLIEREN
PROCÉDÉ ET DISPOSITIF DE POLISSAGE MÉCANIQUE CHIMIQUE

(43) Date of publication of application: 19.07.2017
(73) Proprietor: Eoswiss Engineering Sarl, 1207 Geneva (CH)
(72) Inventor: Astl, Georg, 1206 Geneva (CH)
(74) Representative: Engelhard, Markus

(56) References cited:
- WO-A1-00/68332
- DE-A1-102009 046 849
- JP-A- 2003 165 050
- US-A- 6 083 839
- US-A1- 2004 020 132
- US-A1- 2006 286 906
- US-A1- 2007 026 770
- US-A1- 2011 204 027
- US-B1- 6 435 948
- Lai, Jiun-Ju: "Chapter 3: Mechanisms of material removal in the CMP process", , 22 February 2001 (2001-02-22), pages 75-132, XP002759218, Retrieved from the Internet: URL:http://web.mit.edu/cmp/publications/th esis/jiunyulai/ch3.pdf [retrieved on 2016-06-20]
- Wikipedia: "Chemical mechanical planarization", https://en.wikipedia.org , 11 December 2015 (2015-12-11), XP002759219, Retrieved from the Internet: URL:https://en.wikipedia.org/w/index.php?t itle=Special:Book&bookcmd=download&collect ion_id=cd2faba5aa619fe3a70824b466edcac92ac 992aa&writer=rdf2latex&return_to=Chemical- mechanical+planarization [retrieved on 2016-06-24]

## Description

### TECHNICAL FIELD

The present invention relates to a method for chemical mechanical polishing, a device for polishing a workpiece, a chemical mechanical polishing slurry, a method for polishing a workpiece with an uneven surface and a method for producing a chemical mechanical polishing slurry.

### BACKGROUND

Surface finishing of ceramic and metallic work pieces are essential unit operations in industrial production. Roughly speaking, two types of operations can be distinguished:
- The unit operation of grinding and cutting and
- The final operation of lapping (DIN 8589-15) and polishing.

Both operations are usually described as surface finishing techniques. In grinding and cutting the abrasive is bound, while in polishing and lapping the abrasive particles are not bound.

In grinding, hard grinding particles are pressed against a surface of a work piece. The usually much harder grinding particles (e.g. diamond powder, quartz powder) are scratching and cutting the surface. By this they are removing parts of the surface. The surface is smoothed. The cutting particles are bound in grinding wheels, grinding paper or embedded in polymers or inorganic bodies which are used in mass finishing. These mass finishing methods (DIN 8589-17) are for example vibratory mass finishing, stream finishing, disc finishing and drag finishing. In these mass finishing methods, the abrasive material is embedded in larger grains (the so called "chips"). By this, the larger grains become abrasive as the small abrasive particles stand out from their surfaces. These larger grains, sized several mm up to several cm, are then moved along the workpiece and cut out parts of its surface. Often this operation is done with wet chips. The wetting fluid is usually water and some additives which prevent the redeposition of the cut out parts, anti - foam additives and so on. This liquid is often called "compound". In a special process called "Isotropic Superfinishing" (patented by REM Chemicals, USA) the compound contains chemically active agents, which react with the workpiece surface. The workpiece surface forms a softer surface chemical compound, which is then in turn removed easier by the chips.

The relative movement may be provided by the means of vibration (vibratory mass finishing), motion of the immersed work piece in a bath of abrasive grains or motion of the abrasive grains relative to the work piece by rotation of the vessel.

This material removal mechanism is usually called "Hertz indentation mechanism" as the abrasive grain is pressed into the surface of the workpiece and by this cuts out pieces and smooths the workpiece. The advantages are high removal rates, the disadvantage is a strong sub-surface damage of the workpiece. Also, sharp edges are usually rounded off due to the removal mechanism.

Depending on the grain size of the abrasive bodies, some scratches remain. Usually one is starting with a very course grades of abrasive particles then followed by grinding with finer and finer abrasive particles. Nevertheless even with the fine abrasive particles characteristic scratches remain and also the damaged sub-surface layers remain. The damage of the subsurface layer stems from the plastic deformation through indentation and the comparably high pressures in the bath of abrasive grains. The disadvantages of grinding, cutting are the strong subsurface damage, the edge rounding effect (geometric precision is lost) relatively deep scratches remain after the operation.

Lapping and polishing operations use free abrasive particles which are usually pressed with a lapping or polishing pad against the workpiece. The abrasive particles are usually small (micron sized or smaller). The abrasive particles are usually dispersed in a polishing fluid.

Lapping (uses slightly larger particles) and polishing (using smaller particles) function with a different abrasion mechanism.

The most important factor for their processing speed is the pressure exerted by the polishing pad against the workpiece and the relative speed of the workpiece against the grinding wheel or grinding pad or the grinding chip. This relation is known as "Preston equation" in the literature.

While for "larger" particles (e.g. micron sized diamonds, SiC particles) the Hertz indentation mechanism is dominant, for even smaller and soft particles (in particular submicron sized colloids of aluminum hydroxides, silica sols, Fe-hydroxides) removal of material by chemo-mechanical polishing mechanism ("CMP") is dominant. Here the material does not penetrate into the surface of the workpiece, therefore the sub-surface layer damage is much lower or even not noticeable. After a successful polishing step, the surface is smooth, shiny and has no or very few scratches (from agglomerates). The disadvantage of this polishing step is the comparably longer processing time.

The polishing speed is determined by relative velocity of workpiece and polishing pad (usually a solid polyurethane foam), the depths of the marks to be removed. The hardness and surface chemistry of the material, the concentration and nature of the slurry particles, concentration of oxidizers and other additives in particular anti-settling additives, stabilizers, anti-foam additives and so on.

In industrial operation usually several grinding steps are followed by one or several polishing steps to achieve a finished surface.

Difficulties with the current polishing methods relate to the polishing of non-flat surfaces. Spherical surfaces or free form surfaces usually still have to be polished by hand. This is especially important for the increasing amount of 3D printed parts, which are very difficult to polish with conventional techniques. One of the issues is the grain structure inherent to 3D printed parts, stemming from the production process (the metal powder used is leaving a granular surface after laser melting). The other issue is that 3D printing is most advantageously used for free-form articles. These free form parts need to be either polished with an exactly shaped counterpart or needs to be polished by hand. Hand polishing decreases repeatability, increases costs. The results depend on the operator skills and are not easily transferable. The exactly shaped counterpart is expensive to produce.

As most of the chemical slurry material is not active in polishing, as it is not adsorbed on the pad nor on the surface of the workpiece, most of the material is not utilized, as it is inside the porous polishing pad.

WO 2011/081503 A2 describes a process of fixing abrasive grains, in particular CeO₂, to the polishing pad.

### SUMMARY OF THE INVENTION

The objective of the present invention is to provide a method and a device for chemical-mechanical polishing, CMP, wherein the method and the device overcome one or more of the above-mentioned problems of the prior art.

A first aspect of the invention provides a method for chemical mechanical polishing, CMP, the method comprising:
- placing a workpiece in a container comprising a polishing slurry, and
- applying a shear stress to the polishing slurry such that a jamming transition is generated at a portion of the polishing slurry that is located around the workpiece.

Embodiments of the method of the first aspect provide a method for polishing a workpiece, wherein the dispersion of particles, preferably abrasive particles, is in a dynamically jammed state, while the workpiece is held in or moved through the dispersion.

If a three-dimensional free form needs to be polished, ideally the polishing pad should have a corresponding three-dimensional form. In this case, the three-dimensional modelled pad (or "polishing form") can move exactly along the contours of the workpiece and polish it. Such polishing forms could be made, but are very complicated and expensive to produce, as they have to be created for each and every workpiece again and again.

In the method of the first aspect, such an adapted polishing form is temporarily provided. It is done by immersing the workpiece into the polishing dispersion. Then providing so much stress to the dispersion that it is transformed into a solid like state (this is called a "transient jamming" transition), behaving like a solid polishing form. The workpiece is then polished in this jammed dispersion, by relative motion. As the abrasive particles are now behaving like a solid, the workpiece can be efficiently polished. The stress provided to initiate the jamming transition can be for example from a relative motion of workpiece in the dispersion, of shearing the dispersion mechanically or by shearing the dispersion with ultra sound, magnetic or electric fields. At the end of the polishing process, the shearing stress can be lowered and the dispersion can return back into its un-sheared state. The workpiece can then be removed, washed and cleaned.

When a concentrated dispersion is sheared, depending on the volume fraction ϕ of solids, shear thickening can be observed. Shear thickening means that the viscosity is increasing with shear rate respectively shear stress. In parallel to shear thickening a volume increase is observed. This phenomenon is usually called dilatancy. Often dilatancy and shear thickening are used synonymously. The opposite of shear thickening is shear thinning.

Such shear thickened dispersions have a higher resistance to the relative motion of the workpiece. Shear thickening is a bulk constitutive relation dependent on the local shear rate.

On the contrary, a jamming transition such as the one applied in the method of the first aspect, is not a bulk property (such as dilatancy) but depends on the boundary conditions (e.g. distance and stiffness of the confining walls). During a jamming transition, a volume increase is made difficult or impossible by confining forces. As the dispersion of the abrasive particles cannot expand freely, they are pressed against the workpiece. As the workpiece is moving through this jammed, i.e. solid-like, dispersion of abrasive particles, it is being polished. Preferably, the shear stress can be applied such that the jamming transition occurs around the workpiece in the sense that it occurs not in the entire slurry, but only such that particles in the slurry build so-called "stress chains" between the workpiece and walls of the container.

In a first implementation of the method according to the first aspect, the polishing slurry comprises particles dispersed in the slurry with a volume fraction between 0,35 and 0,65. Experiments have shown that this provides optimal polishing results.

According to the invention the variable confining stress is applied by a movable lid covering the container. The movable lid can be driven with a variable force, e.g. controlled by a controller.

In another implementation of the method according to the first aspect, the dispersed particles comprise particles from the group of alumina, BC, SiC, diamond, porcellaine, silicas, alumino-silicas, steel, glass, and/or ZrO2.

Experiments have shown that with the particles, particularly good results can be achieved. It is also possible to use a mixture of different particles from the above-mentioned group.

According to the invention, the shear stress is applied by the moving workpiece.

In another implementation of the method of the first aspect, the dispersed particles comprise hard abrasives that are embedded in a hard organic polymer material and/or coated onto them, in particular urea-formaldehyde resin, polypropylene, polyethylene, polyester, polyurethane or polyacrylate material.

By embedding the abrasive material in polymer materials, always new abrasive grains are exposed on the surface, even when the organic base polymer material is abraded. In addition the hardness of the combined material can be adjusted by the choice of the polymer material. The cutting surface will thus be constantly renewed.

In another implementation of the method according to the first aspect as such or according to any of the preceding implementations of the first aspect, the dispersed particles comprise hard abrasives embedded in soft organic polymer material and/or coated onto them, in particular rubber, cellulose, mais or corn grains, waxes, emulsions with a softening point higher than 20°C and lower than 100°C.

The hard particles embedded in soft particles or coated onto soft particles offer the advantage, that the indention depth of the hard particles in the workpiece may be adjusted through the E-Modul of the soft material.

If the hard diamond particles are located on a soft polymer, then under the polishing pressure, the majority of the diamond particle diameter will be pressed into the soft material, leaving only a fraction of the diamond particle for the cutting and polishing action on the workpiece.

In another implementation of the method according to the first aspect as such or according to any of the preceding implementations of the first aspect, the dispersed particles comprise hard abrasives embedded in polymeric inorganic materials and/or coated onto it, in particular silicates, aluminosilicates, tungstates, manganates, iron oxides.

These inorganic polymeric materials offer improved chemical resistance over organic polymer materials. Also these materials have higher hardness as polymer materials and therefore increase the cutting pressure. In addition inorganic polymers have higher densities than organic polymers, and therefore exert a higher pressure on the workpiece through this higher material pressure.

In yet another implementation of the method according to the first aspect as such or according to any of the preceding implementations of the first aspect, the shear stress is applied by the workpiece.

For example, the workpiece can be forced towards one of the walls of the container. Obtaining the required shear stress by moving the workpiece has the advantage that the jamming transition can be caused in the area surrounding the workpiece.

In yet another implementation of the method according to the first aspect as such or according to any of the preceding implementations of the first aspect, the method further comprises a step of applying one or more oscillating force fields to the workpiece, in particular for applying a shear stress to the workpiece.

Mechanical oscillatory force fields present a particularly efficient way of creating a jamming transition near a surface of the workpiece. A frequency of the oscillatory force field can be in the range of 5 to 5000 Hz, preferably between 50 Hz and 500 Hz.

Oscillatory force fields present another particularly efficient way to create a jamming transition near a surface of a workpiece. A frequency of an ultrasound oscillatory field can be in the range of 16 kHz to 2 MHz, preferably between 16 kHz and 400 kHz.

In a fifth implementation of the method according to the first aspect as such or according to any of the preceding implementations of the first aspect, the method further comprises:
- embedding the workpiece in the slurry, and
- moving the slurry with a speed relative to the workpiece which is higher than 80% of a of a characteristic speed of the jamming transition and/or lower than 120% of a characteristic speed of the jamming transition

In a sixth implementation of the method according to the first aspect as such or according to any of the preceding implementations of the first aspect, the dispersed particles are magnetic and the method comprises a further step of applying a magnetic field to the dispersed particles, wherein in particular the magnetic field has a magnetic field strength of more than 1T and/or the magnetic field is an oscillating magnetic field.

Preferably, the dispersed particles comprise non-abrasive particles which are magnetic.

Thus, the dispersed particles themselves can be driven by the magnetic field to create the shear stress that is responsible for creating the jamming transition.

A second aspect of the invention refers to a device for polishing a workpiece, the device comprising:
- a container for a polishing slurry,
- a holding device for holding the workpiece in the container surrounded by the polishing slurry, and
- a shear stress applicator,
wherein the shear stress applicator is configured to apply a shear stress to the polishing slurry such that a jamming transition is generated at a portion of the polishing slurry that is located around the workpiece.

The shear stress applicator can be for example a pump, a propeller, a moving guide, one or more vibrating walls and the like.

The device of the second aspect presents a particularly efficient tool for performing a polishing method according to the first aspect or one of its implementations.

Preferably, the device of the second aspect of the invention further comprises a movable lid that covers one or more openings of the container. Optionally, the movable lid can be controlled such that a suitable volume expansion or volume compression of the slurry is achieved.

In a preferred embodiment, the device of the second aspect implements a feedback loop for controlling the jamming transition. The lid can be placed loosely, such that a volume expansion is allowed to occur, but not a jamming transition. The movable lid can also be controlled to apply a force on the slurry, such that a volume expansion is prevented. In this case, a jamming transition occurs, wherein the strength and dimensions of the jamming transition can depend on the force applied with the lid.

The methods according to the first aspect of the invention can be performed by the device according to the second aspect of the invention. Further features or implementations of the method according to the first aspect of the invention can perform the functionality of the device according to the second aspect of the invention and its different implementation forms.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description merely show some embodiments of the present invention. Modifications of these embodiments are possible without departing from the scope of the present invention as defined in the claims.
- FIG. 1: is a flow chart illustrating a method for chemical-mechanical polishing in accordance with an embodiment of the present invention,
- FIG. 2: is a schematic illustration of a device for chemical-mechanical polishing in accordance with a further embodiment of the present invention,

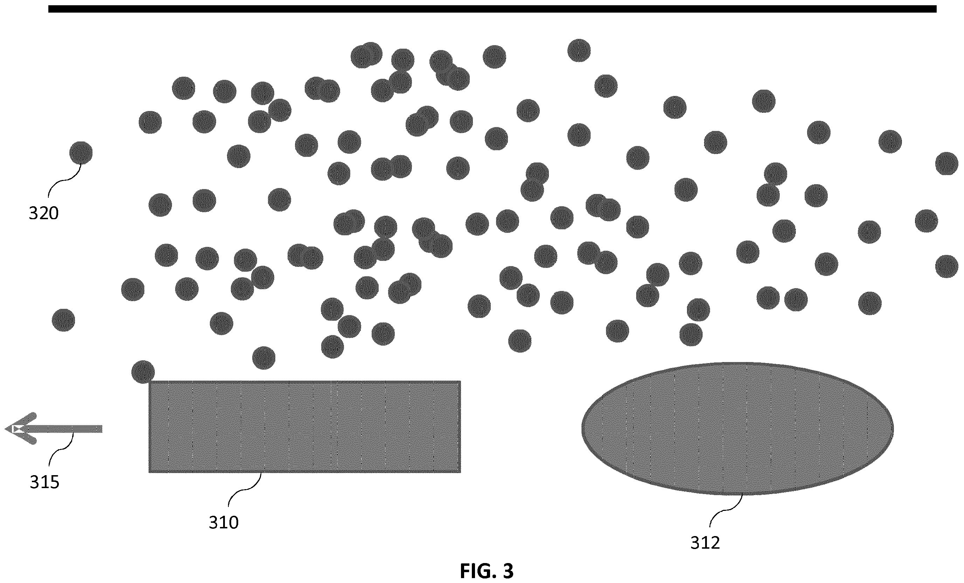

- FIG. 3: is a schematic illustration of a flow behaviour if workpieces and composite dispersed particles are moved relative to each other in a situation of low volume fraction of the composite particles, in accordance with a further embodiment of the present invention,

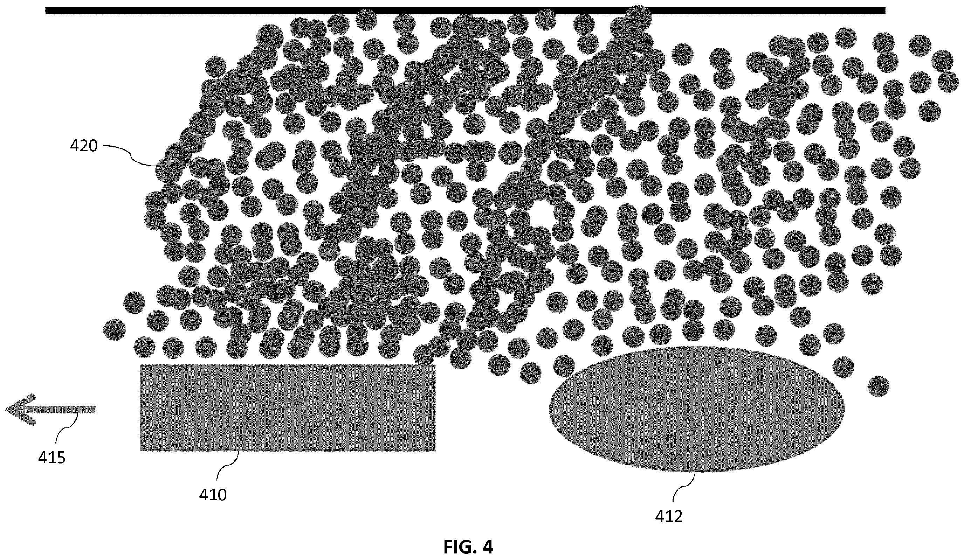

- FIG. 4: is a schematic illustration of a flow behaviour if workpieces and composite dispersed particles are moved relative to each other with a higher volume fraction of particles, in accordance with a further embodiment of the present invention,

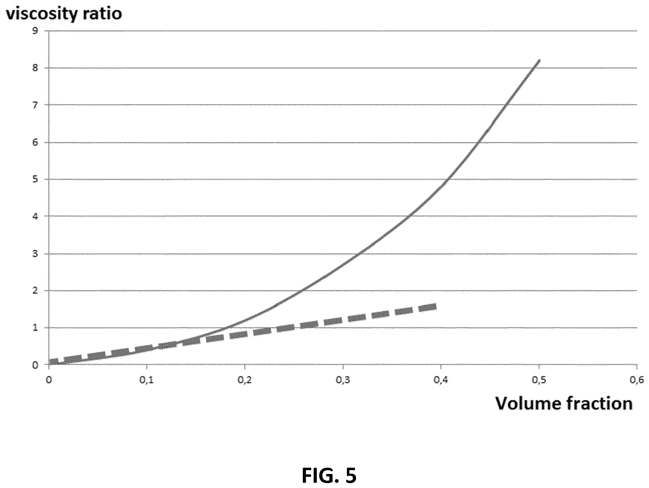

- FIG. 5: is a diagram illustrating a relationship between viscosity ratio and volume fraction, and

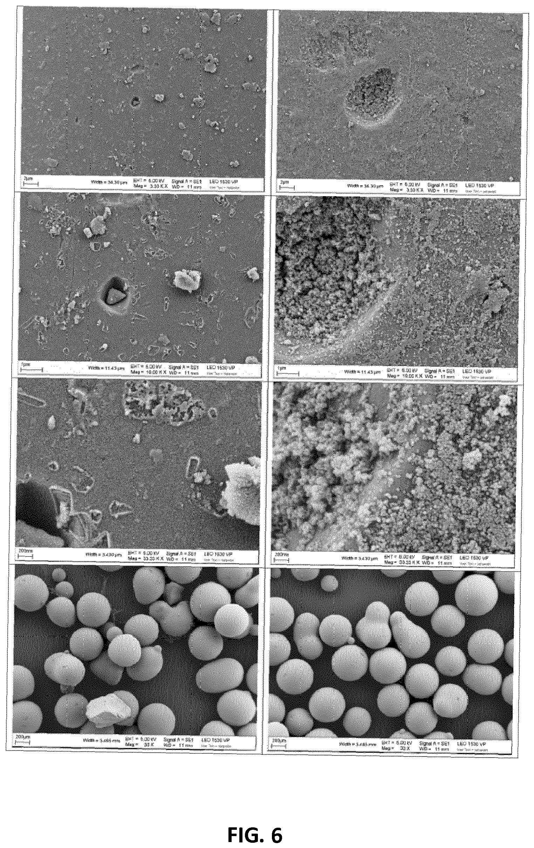

- FIG. 6: shows electron-microscopic pictures of experimental results.

### Detailed Description of the Embodiments

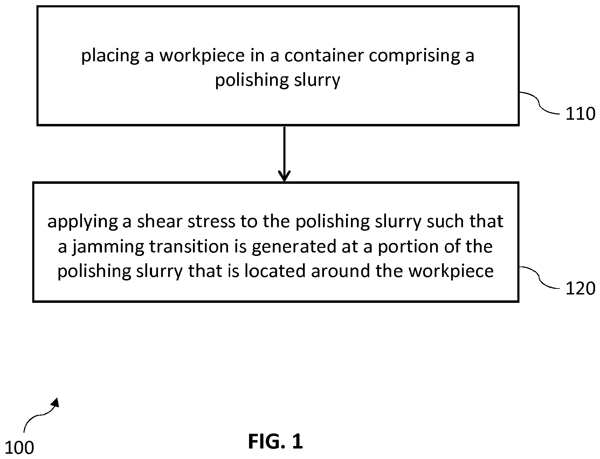

FIG. 1 shows a method 100 for chemical mechanical polishing, CMP. The method comprising a first step 110 of placing a workpiece in a container comprising a polishing slurry. The method further comprises a second step 120 of applying a shear stress to the polishing slurry such that a jamming transition is generated at a portion of the polishing slurry that is located around the workpiece.

The method of FIG. 1 can comprise the following advantages:
1) 3 dimensional polishing of free form surfaces is possible
2) Polishing pressure and therefore also abrasion mode can be adjusted with the speed of relative movement
3) The polishing pressure can be adjusted by the volume fraction of abrasive particles
4) Polishing pressure can be adjusted by the wall stiffness of container and particles.
5) The polishing pressure can be varied through movement of one of the walls, enlarging the volume and thereby reducing the packing density.

The step 120 of applying the shear stress to generate a jamming transition at the location of the workpiece or around the workpiece can be achieved e.g. by:
a) Feeding a polishing slurry at the surface of the workpiece to be polished and preventing an expansion of the slurry, e.g. by having the container sealed and completely filled.
b) Rotating the workpiece in a sealed container with a sufficiently high rotation speed.
c) Using guide plates to guide a slurry towards the sealed surface and/or rotating the workpiece.
d) Moving the workpiece in a sealed container that is completely filled with a polishing slurry, at the same time an oscillating force field is applied, e.g. the workpiece is being vibrated with a vibration frequency between 100 and 2000 Hz. Alternatively, ultrasound can be applied to the dispersion.

In order to generate the jamming transition, it may be necessary to prevent that the slurry expands its volume. To this end, a sealed closed container can be used. The pressure (caused e.g. by dilatancy of the slurry) can be measured and can be regulated with a movable lid of the container.

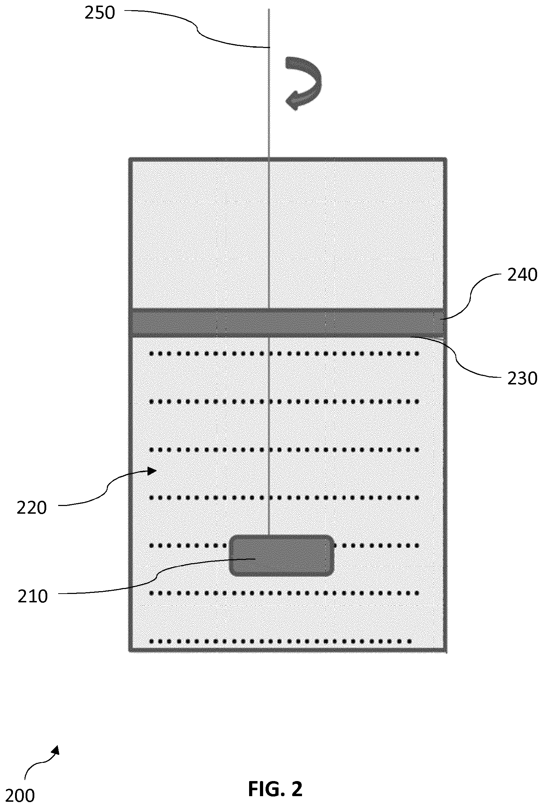

The method of FIG. 1 can be performed e.g. with a device 200 as illustrated in FIG. 2. The device 200 is basically a container 200 with a lid 240, wherein the lid 240 comprises a lower surface 230 for exerting a force on the slurry 220 located in the container 200. The slurry 220 surrounds workpiece 210, which is mounted on a workpiece holder 250. By rotating the workpiece holder 250, the workpiece 210 can be rotated in the container 210. A relative motion of the workpiece 210 and the lid 240 (which may also be pressurized from above) leads to a shear stress in the slurry surrounding the workpiece 210. By choosing appropriate rotation and linear forces, a jamming transition at the slurry near the workpiece can be created. By moving the workpiece 210 through the slurry, a superior polishing effect on the workpiece 210 can be achieved.

A confining force may be coming from stiff walls of the container 200, or in an open container from the surface tension of this jammed system. A maximum of confining force is exerted, when all sides of the container are made out of stiff walls. Stiff walls withstand the normal forces, which try to increase the volume.

When the dispersion is sheared by the motion of the workpiece, the particles would naturally flow past each other, by increasing the volume ("dilatancy"). As thus the volume increase is hindered by the stiff walls, particles are forced to stay in contact to each other. These contacting particles can transiently build chains of contacting particles, so called "stress chains". These stress chains bridge between solid walls (e.g. workpiece- container wall). By this they translate the shear stress into pressure between abrasive particles and workpiece. Just as in the two-dimensional case of polishing.

The appearance of such particle to particle contact chains ("stress chains") will depend on the packing density. If the packing density is low, then they can easily flow past each other. If the packing density is too high, then the particles are closely packed already without shearing force and the workpiece cannot be moved anymore into the particle dispersion.

In a preferred embodiment the volume fraction ϕ of the abrasive bodies is higher than 0.35 and lower than 0.65.

The abrasive particles in the jammed dispersion are pressed against the workpiece. The force pressing these particles against the workpiece, is the confining force. The confining force comes from the stiffness of the container walls. In open systems the confining force comes from the surface tension of the liquid-air interface of the jammed dispersion and the weight of the liquid volume above.

The stiffer the container walls and the harder the particles, the more force can be exerted. The stiffness of the container wall is also related to the geometric construction. In addition the stiffness is also a material property, related to the elastic properties. If the abrasive particles are soft (e.g. polymer beads with diamond powder), then preferentially the polymer beads will be compressed. The transmitted force will be low. The mode of action will result in gentle polishing. Also if the container walls are not stiff but compliant (e-g. a polymer foil or membrane or a flexible, soft plastic wall) then also they cannot exert a force strong enough for significant cutting, but will result in polishing.

If the particles are hard (not compressible by the normal forces), then they will either cut the surface of the workpiece or polish the surface of the workpiece. Large particles cut, small particles (below 1 micron) polish the workpiece.

If the surface tension is greatly reduced in open system, then also the confining force from the surface tension is greatly reduced and consequently the exerted force is reduced.

In a preferred embodiment the abrasive bodies are hard; preferably with a Mohs hardness higher than 3.

In a preferred embodiment hard abrasive materials are used in the right size range, or they are embedded in another polymeric organic or inorganic material.

In another preferred embodiment the container (containing abrasive bodies + workpiece) has no open surface. All surfaces are walled.

In a preferred embodiment, the container is made out of glass, stainless steel, aluminum, plastic construction material, to have a stiff structure. The hardness of the surface of these construction materials has to be higher than Mohs 3.

The abrasive particles may be in the form of spheres, elongated bodies like ellipsoids, spikey particles and so forth. For each of the different bodies the transition packing fraction will be slightly different. Elongated spheres will have a lower critical volume fraction. The more frictional interaction between the particles is possible, the easier force chains can form.

The critical packaging fraction can be measured by stress- viscosity curves. For fully spherical particles the critical volume fraction is often between 0.45 and 0.55 (depending on size, viscosity of fluid, density difference between fluid and particles).

The physical maximum volume fraction of gravity settling random spheres (mono-modal in size) is approx. 0.65. If several size ranges are combined (e.g. size range 400 - 600 micron with the size range of 1-2 microns, then even higher packing densities are possible, as the smaller spheres slip between the larger spheres.

The flow behavior of differently sized particles is different. So are small particles (20 nm - 1 micron diameter) so called "colloids" governed by their large surface area in relation to their mass. This particle may have surface potentials or specific topological chemistry, which is different from particles made out of the same material but with larger size. Differences are for example that colloids experience Brownian motion in free dispersion, while larger particles do not experience Brownian motion as dominant effect.

In another preferred embodiment the size for abrasive particles ranges from 1 micron to 2000 micron.

In another preferred embodiment the size for abrasive particles ranges from 20nm micron to 1 micron.

### Examples

Example 1:

Experimental abrasive bodies "A" with a size range of 400 - 600 micron

Volume fraction of abrasive bodies at Φ_{c} as defined independently: 0.43
Density of abrasive bodies: 2.5 g/cm³
Dispersion liquid: Water at pH = 3.8
H₂O₂ concentrations: 12 weight % in the liquid (w/w).

The dispersion of abrasive particles is sheared by a steel propeller at 800 RPM (Rotations per minute).

The flat round stainless steel workpiece appeared with mirror like reflections on the side where it was exposed to the shearing action of the abrasive particles respectively propeller. The backside of the workpiece, which was not experiencing the abrasive dispersion in the same amount as the front side, appeared untreated.

### Example 2:

In another test, where only the volume fractions where changed to ϕ = 0.3 , no polishing action was observed.

### Example 3:

The same conditions as example 1 but with ϕ = 0.38:
Only very slight polishing was observed on the front side of the stainless steel part.

Embodiments of the invention relate to the following further aspects:
1) A polishing method, where the workpiece is moved relative to a dispersion of abrasive particles characterized by that
   it has a volume fraction ϕ of dispersed particles higher than 0.35 and lower than 0.65 the particles are hard
   the dispersion is contained in a stiff walled container
   the shearing stress is between 0.8 τ_{c} and 1.2 τ_{c}
2) A polishing method as in above further aspect 1, where the polishing liquid contains CMP media, which are chemically modifying the surface of the workpiece for easier removal.
3) A polishing method as in further aspect 1, where the polishing particles are coming from the group of alumina, BC, SiC, diamond, porcellaine, steel, glass, ZrO₂.
4) A polishing method as in further aspect 1, where the abrasive bodies contain hard abrasives embedded in hard organic polymer material, in particular urea-formaldehyde resin, polypropylene, polyethylene, polyester, polyurethane or polyacrylate material.
5) A polishing method as in further aspect 1, where the abrasive bodies contain hard abrasives embedded in soft organic polymer material and/or coated onto it, in particular rubber, cellulose, mais or corn grains, waxes, emulsions with a softening point higher than 20°C and lower than 100°C.
6) A polishing method as in further aspect 1, where the abrasive bodies contain hard abrasives embedded in polymeric inorganic materials and/or coated onto it, in particular silicates, aluminosilicates, tungstates, manganates, iron oxides.
7) A polishing method as in further aspect 1, where the abrasive particles are in the size range of 1 micron to 2 mm.
8) A polishing method as in further aspect 1, where the abrasive particles are in the size range of 20 nm to 1 micron.

A jammed state of a dispersion (particles in air or particles in fluids) develops in response to shear and supports a load when it spans between solid boundaries.

The jammed state can be defined by an onset, a critical value and the offset of the jammed state. Usually this is related to the packing density of the dispersion. It may also be related to a minimum shear stress (= onset) and a maximum (=offset) shear stress for a given packing density.

Here jammed state is used synonymously for the span of states between onset and offset (end) of the jammed state.

Jamming state, jamming transition, discontinuous shear thickening are used synonymously.

They constitute not a bulk constitutive relation dependent on local shear rate like shear thickening, but depend on the boundary conditions (e.g. hardness of walls).

Stress chains can be transient, respectively temporary structures

### Packing density, volume fraction ϕ or Packing fraction ϕ:

The packing density = packing fraction ϕ = Volume of solid particles/ (Volume of solid particles + Volume of fluid).

The fluid may be liquid or gas (air).

### Critical packing fraction ϕ_{c}, the critical volume fraction:

This is the packing fraction where the viscosity has a strong increase in magnitude over a small stress range.

The viscosity in proximity of the critical packaging density can be locally fitted with a power law

Viscosity *η* proportional to stress τ^{(1-ε)}. For Newtonian behavior ε= 1. For the critical packaging density ε -> 0.

In polishing machines, this critical packing density has to be tested experimentally as the "real world" conditions in machines with abrasive medias are difficult to model. To this, polishing tests are performed with standard test pieces as a function of ϕ and the relative movement speed. The polishing actions after pre-defined times are compared. The volume fraction ϕ where under the same shearing stress, the largest relative change in polishing action occurs, is defined as the critical volume fraction. This value is then specific for this equipment, abrasive dispersion and relative movement speed.

### Critical stress, critical shearing:

The critical stress is the stress necessary to induce a transiently jammed structure. This critical stress τ_{c} is defined and found in the same way as the critical volume fraction. The stress where ε->0 is defined as the critical stress τ_{c}.

### Stiff container wall:

The container wall withstands a stress of minimum up to τ_{c}. In other word, when the dispersion is going into the transient jamming state (at τ_{c}), a normal force is exerted onto the walls. The walls are built to withstand this normal force which can be up to τ_{c}.

### Confining stress

The confining stress is counteracting the free movement of the abrasive particles in the jammed state.

The confining stress is exerted by the container walls. In open containers, also the open surface exerts a confining force coming from the surface tension in addition to the weight of the volume above the workpiece

Stiff container wall provide a high confining stress, flexible container walls (e.g. membranes) provide a low confining force.

Instead of confining stress, we also refer to confining force.

## Claims

1. A method (100) for chemical mechanical polishing, CMP, the method comprising:
- placing (110) a workpiece (210; 310, 312; 410, 412) in a container (200) comprising a polishing slurry (220), and
- applying a shear stress to the polishing slurry (220) such that a jamming transition is generated at a portion of the polishing slurry that is located around the workpiece,
wherein the shear stress is applied by moving the workpiece through the polishing slurry (210; 310, 312; 410, 412) and a variable confining stress is applied by a movable lid (240) covering the container (200).

2. The method of claim 1, wherein the polishing slurry (220) comprises particles (320; 420) dispersed in the slurry (220) with a volume fraction between 0,35 and 0,65.

3. The method of one of the previous claims, further comprising a step of applying one or more oscillating force fields to the workpiece (210; 310, 312; 410, 412), in particular for applying a shear stress to the workpiece.

4. The method of one of the previous claims, further comprising:
- embedding the workpiece in the slurry (220), and
- moving the slurry (220) with a speed relative to the workpiece which is higher than 80% and/or lower than 120% of a characteristic speed of the jamming transition.

5. The method of one of the previous claims, wherein the dispersed particles (320; 420) are magnetic and wherein the method comprises a further step of applying a magnetic field to the dispersed particles, wherein in particular the magnetic field has a magnetic field strength of more than 1T and/or wherein the magnetic field is an oscillating magnetic field.

6. A device for polishing a workpiece, the device comprising:
- a container (200) for a polishing slurry (220),
- a holding device (250) for holding the workpiece (210) in the container surrounded by the polishing slurry,
- a shear stress applicator ,
wherein the shear stress applicator is configured to apply a shear stress to the polishing slurry such that a jamming transition is generated at a portion of the polishing slurry that is located around the workpiece,
wherein the device is configured to apply the shear stress by moving the workpiece through the polishing slurry (210; 310, 312; 410, 412) and to apply a variable confining stress by a movable lid (240) covering the container (200).

## Patentansprüche

1. Verfahren (100) zum chemisch-mechanischen Polieren, CMP, wobei das Verfahren umfasst:
- Anordnen (110) eines Werkstücks (210; 310, 312; 410, 412) in einem Behälter (200), der eine Polieraufschlämmung (220) enthält, und
- Anwenden einer Scherspannung auf die Polieraufschlämmung (220), so dass an einem Abschnitt der Polieraufschlämmung, der sich um das Werkstück herum befindet, ein Jamming-Übergang erzeugt wird,
wobei die Scherspannung durch Bewegen des Werkstücks durch die Polieraufschlämmung (210; 310, 312; 410, 412) angewendet wird und eine variable Begrenzungsspannung durch einen beweglichen Deckel (240), der den Behälter (200) abdeckt, angewendet wird.

2. Verfahren nach Anspruch 1, wobei die Polieraufschlämmung (220) Partikel (320; 420) umfasst, die in der Aufschlämmung (220) mit einem Volumenanteil zwischen 0,35 und 0,65 dispergiert sind.

3. Verfahren nach einem der vorhergehenden Ansprüche, das weiterhin einen Schritt des Anwendens eines oder mehrerer oszillierender Kraftfelder auf das Werkstück (210; 310, 312; 410, 412) umfasst, insbesondere zum Anwenden einer Scherspannung auf das Werkstück.

4. Verfahren nach einem der vorhergehenden Ansprüche, weiter umfassend:
- Einbetten des Werkstücks in die Aufschlämmung (220), und
- Bewegen der Aufschlämmung (220) mit einer Geschwindigkeit relativ zum Werkstück, die höher als 80% und/oder niedriger als 120% einer charakteristischen Geschwindigkeit des Jamming-Übergangs ist.

5. Verfahren nach einem der vorhergehenden Ansprüche, wobei die dispergierten Partikel (320; 420) magnetisch sind und wobei das Verfahren einen weiteren Schritt des Anwendens eines Magnetfeldes auf die dispergierten Partikel umfasst, wobei insbesondere das Magnetfeld eine magnetische Feldstärke von mehr als 1T aufweist und/oder wobei das Magnetfeld ein oszillierendes magnetisches Feld ist.

6. Vorrichtung zum Polieren eines Werkstücks, wobei die Vorrichtung umfasst:
- einen Behälter (200) für eine Polieraufschlämmung (220),
- eine Haltevorrichtung (250) zum Halten des Werkstücks (210) in dem von der Polieraufschlämmung umgebenen Behälter,
- einen Scherspannungsapplikator,
wobei der Scherspannungsapplikator konfiguriert ist, um eine Scherspannung auf die Polieraufschlämmung anzuwenden, so dass ein Jamming-Übergang an einem Abschnitt der Polieraufschlämmung erzeugt wird, der sich um das Werkstück herum befindet,
wobei die Vorrichtung konfiguriert ist, um die Scherspannung durch Bewegen des Werkstücks durch die Polieraufschlämmung (210; 310, 312; 410, 412) anzuwenden und um eine variable Begrenzungsspannung durch einen beweglichen Deckel (240) anzuwenden, der den Behälter (200) abdeckt.

## Revendications

1. Procédé (100) de polissage mécanique chimique, CMP, le procédé comprenant :
- le placement (110) d'une pièce (210 ; 310, 312 ; 410, 412) dans un contenant (200) qui comprend une boue de polissage (220), et
- l'application d'une contrainte de cisaillement à la boue de polissage (220) de sorte qu'une transition de calage soit générée au niveau d'une partie de la boue de polissage qui se trouve autour de la pièce,
dans lequel la contrainte de cisaillement est appliquée en déplaçant la pièce dans la boue de polissage (210 ; 310, 312 ; 410, 412) et une contrainte de confinement variable est appliquée par un capot mobile (240) qui recouvre le contenant (200).

2. Procédé selon la revendication 1, dans lequel la boue de polissage (220) comprend des particules (320 ; 420) dispersées dans la boue (220) avec une fraction de volume comprise entre 0,35 et 0,65.

3. Procédé selon l'une des revendications précédentes, comprenant en outre une étape d'application d'un ou plusieurs champ(s) de force oscillatoire à la pièce (210 ; 310, 312 ; 410, 412), en particulier d'application d'une contrainte de cisaillement à la pièce.

4. Procédé selon l'une des revendications précédentes, comprenant en outre :
- l'intégration de la pièce dans la boue (220), et
- le déplacement de la boue (220) à une vitesse par rapport à la pièce qui est supérieure à 80% et/ou inférieure à 120% d'une vitesse caractéristique de la transition de calage.

5. Procédé selon l'une des revendications précédentes, dans lequel les particules dispersées (320 ; 420) sont magnétiques, et dans lequel le procédé comprend une étape supplémentaire d'application d'un champ magnétique aux particules dispersées, dans lequel, en particulier, le champ magnétique présente une intensité de champ magnétique de plus de 1T, et/ou dans lequel le champ magnétique est un champ magnétique oscillatoire.

6. Dispositif de polissage d'une pièce, le dispositif comprenant :
- un contenant (200) destiné à une boue de polissage (220),
- un dispositif de maintien (250) destiné à maintenir la pièce (210) dans le contenant, entourée par la boue de polissage,
- un applicateur de contrainte de cisaillement,
dans lequel l'applicateur de contrainte de cisaillement est configuré pour appliquer une contrainte de cisaillement à la boue de polissage de sorte qu'une transition de calage soit générée au niveau d'une partie de la boue de polissage qui se trouve autour de la pièce,
dans lequel le dispositif est configuré pour appliquer la contrainte de cisaillement en déplaçant la pièce dans la boue de polissage (210; 310, 312 ; 410, 412) et pour appliquer une contrainte de confinement variable par un capot mobile (240) qui recouvre le contenant (200).
